# EUROPÄISCHE PATENTANMELDUNG

(11) **EP 0 575 934 A2**
(43) Veröffentlichungstag der Anmeldung: **29.12.1993**
(21) Anmeldenummer: 93109864.4
(22) Anmeldetag: 21.06.1993
(51) Int. Cl.: G11B 7/007, G11B 11/10, G11B 13/04

(54) **Aufzeichnung und Wiedergabe von Informationen bei ROM-RAM-Speichermedien**

(30) Priorität: 23.06.1992 DE 4220486
(71) Anmelder: Deutsche Thomson-Brandt GmbH, D-78003 Villingen-Schwenningen (DE)
(72) Erfinder: Chikazawa, Yoshiharu, Tokyo 135 (JP); Kawamura, Akira, Hachiouji-shi, Tokyo 193 (JP); Morimoto, Yasuaki, D-7730 VS-Villingen (DE); Zucker, Friedhelm, D-7730 VS-Villingen (DE); Büchler, Christian, D-7730 VS-Marbach (DE)

(57) **Zusammenfassung**

1. Die Erfindung betrifft ein Verfahren und eine Vorrichtung zur Aufzeichnung und Wiedergabe von Informationen bei einem ROM-RAM-Speichermedium.

2. Aufgabe ist es, die verfügbare Speicherkapazität des ROM-RAM-Speichermediums trotz unterschiedlicher Aufzeichnungs- und Wiedergabeverfahren auf eine über die mit der Summe der unterschiedlich Verfahren erreichbare Kapazität hinausgehend zu erhöhen und die durch das Wobbeln der ROM-Informationsspur bedingten Nachteile bei gleichzeitiger Verringerung des Aufwandes zu vermeiden.

2.2 Erfindungsgemäß werden zur Aufzeichnung von Informationen aus dem ROM-Bereich des ROM-RAM-Speichermediums gelesene Daten zur Hilfe genommen und/oder eine Wiedergabe von Informationen aus dem RAM-Bereich unter Zuhilfenahme von aus dem ROM-Bereich des ROM-RAM-Speichermediums gelesener Daten durchgeführt.

2.3 Das Anwendungsgebiet betrifft insbesondere ROM-RAM-Speichermedien sowie entsprechende Geräte zur Aufzeichnung und Wiedergabe der Informationen.

## Beschreibung

Die Erfindung betrifft ein Verfahren und eine Vorrichtung zur Aufzeichnung und Wiedergabe von Informationen im Zusammenhang mit Speichersystemen, die sowohl einen Festwertspeicher bzw. sogenannten ROM als auch einen Schreib-Lesespeicher, einen sogenannten RAM, enthalten. Das Speichersystem kann ein optisches Speichersystem in Form einer magneto-optischen Platte oder ein bandförmiges Speichersystem sein, sowie von jedem anderen ROM-RAM-Speichermedium gebildet werden.

Es ist allgemein bekannt, zur Aufzeichnung und Wiedergabe von Informationen sowohl optische, magnetische als auch magneto-optische Speichersysteme zu verwenden.

Optische Speichersysteme, wie beispielsweise die als CD bezeichnete Compact-Disc, weisen in einer spiralförmigen Spur Vertiefungen, sogenannte Pits, auf, die auf der CD gespeicherte Informationen bzw. Daten darstellen. Diese Vertiefungen sind auf bzw. in der CD fest implantiert, so daß die CD der Gruppe der Festwertspeicher bzw. Nur-Lese-Speicher zuzuordnen ist. Zur Wiedergabe der auf der als optische Platte bekannten CD gespeicherten Informationen wird die CD mit einer Rotationsgeschwindigkeit beschleunigt und mit einem Lichtstrahl abgetastet, wobei die Geschwindigkeit des Plattentellers mit Datensignalen, die im von der Platte gelesenen Informationssignal enthalten sind, geregelt wird. Um trotz spiralförmiger Informationsspur bei der Wiedergabe eine annähernd konstante Lesegeschwindigkeit zu gewährleisten, wird die Platte nahe ihres Zentrums bei einer höheren Rotationsgeschwindigkeit als am Rand abgetastet.

Magnetische Speichersysteme, die allgemein als Tonband oder Videoband bekannt sind, werden in der Regel als Speicher mit wahlfreiem Zugriff bzw. sowohl als Schreib- als auch als Lesespeicher verwendet. Der Informationsträger, das Magnetband, wird dabei mit annähernd konstanter Geschwindigkeit an einem Aufzeichnungs- bzw. Wiedergabekopf vorbeigeführt. Als magnetisches Speichersystem ist ferner die Magnetplatte bekannt, wie sie für Computer verwendet wird. Bei der Magnetplatte für Computer sind die Daten in sogenannten Sektoren abgelegt.

Um die Vorteile magnetischer Speichersysteme, der immer wieder neuen Beschreibbarkeit, auch für optische Platten nutzen zu können, ist es bereits bekannt, ein magneto-optisches Aufzeichnungsverfahren im Zusammenhang mit einer sogenannten MOD zu verwenden. Während das Bespielen bei der CD-WORM nur einmal praktiziert werden kann, ermöglicht die MOD das mehrfache Löschen und Bespielen einer derartigen Disc. Die magneto-optische Platte bzw. MOD, die keine Vertiefungen bzw. Pits aufweist, ist nahezu beliebig oft lösch- und wiederbespielbar. Die Informationen sind in Domänen unterschiedlicher Magnetisierungsrichtung gespeichert und werden mit polarisiertem Licht ausgelesen. Zum Herstellen der Korrelation zwischen der Aufzeichnung bzw. Wiedergabe von Informationen und der Rotationsgeschwindigkeit der optischen Platte sind ein Verfahren und eine Vorrichtung zur Aufzeichnung und Wiedergabe von Informationen bekannt vgl. DE-OS 29 23 581 A1, bei denen die spiralförmige Informationsspur beim Aufzeichnen eines Informationszuges in einer orthogonal dazu verlaufenden Richtung, synchron mit Synchronisationssignalen, die in gleichen Zeitintervallen in dem Informationszug angeordnet sind, gewobbelt wird. Die spiralförmige Informationsspur stellt sich dadurch als Wellenlinie dar und weist diesbezüglich einen wesentlichen Unterschied zur Informationsspur der CD auf. Das Wobbeln der Informationsspur ist insbesondere zum Regeln der Rotationsgeschwindigkeit der optischen Platte beim Aufzeichnen der Informationen erforderlich. Durch die Wobbelfrequenz werden jedoch erhöhte Anforderungen an das den Licht- bzw. Laserstrahl führende Abtast- bzw. Wiedergabesystem gestellt und die Aufzeichnung sowie Wiedergabe nachteilig beeinflußt. Um trotz gewobbelter Informationsspuren auf dem Aufzeichnungsträger eine genaue Spurführung mittels eines einfachen Spurregelkreises zu erreichen, ist eine optische Abtastvorrichtung bekannt, die dadurch gekennzeichnet ist, daß der Abstand zwischen den Beugungsstrahlen +1. und -1. Ordnung, welche das Spurfehlersignal erzeugen, auf dem Aufzeichnungsträger ein ganzzahliges Vielfaches der zur Mittenfrequenz gehörenden Wellenlänge beträgt, mit der die Datenspuren um ihre Mittellage gewobbelt sind, vgl. DE-OS 39 23 330 A1.

Es sind Mittel erforderlich, die das Wobbelsignal erzeugen sowie bei der Wiedergabe dekodieren und ausblenden. Das aufgezeichnete Informationssignal enthält ebenfalls Taktsignale, die nach dem Auffinden des Wiedergabeortes zum Steuern der Wiedergabe verwendet werden.

In dem Bestreben, die Speicherkapazität des Informationsträgers zu erhöhen, ist weiterhin ein optischer Aufzeichnungsträger mit einer lichtdurchlässigen Schicht bekannt, vgl. DE-OS 37 32 875 A1, der eine Kombination aus einer CD und einer MOD darstellt. Da einerseits Daten bzw. Informationen in den Pits gespeichert sind und andererseits durch Magnetisieren der Licht reflektierenden, magnetischen Schicht analog zur MOD Informationen nahezu beliebig oft speicherbar und löschbar sind, ist die Speicherkapazität mindestens um den Faktor 2 vergrößert. Der Aufzeichnungsträger, der auch als RO/AM-Disc oder ROM-RAM-Speichermedium bezeichnet wird, kann in vorteilhafter Weise mit einer optischen Abtastvorrichtung sowohl beschrieben als auch gelesen werden, vgl. DE-OS 37 32 874 A1.

Es ist daher Aufgabe der Erfindung, die nutzbare Speicherkapazität eines ROM-RAM-Speichersmediums trotz unterschiedlicher Aufzeichnungs- und Wiedergabeverfahren auf eine über die mit der Summe der unterschiedlichen Verfahren erreichbare Kapazität hinausgehend zu erhöhen und die durch das Wobbeln der ROM-Informationsspur bedingten Nachteile bei gleichzeitiger Verringerung des Aufwandes zu vermeiden.

Diese Aufgabe wird erfindungsgemäß mit einem Verfahren und einer Vorrichtung gelöst, bei denen mindestens zum Aufzeichnen von Informationen im RAM-Bereich eines ROM-RAM-Speichermediums und vorzugsweise auch zur Wiedergabe von Informationen aus dem ROM-Bereich des ROM-RAM-Speichermediums gelesene Daten zur Hilfe genommen werden. Die Zuhilfenahme von Daten aus dem ROM-Bereich des ROM-RAM-Speichermediums wird insbesondere unter dem Gesichtspunkt einer Ortsbestimmung und zum Herbeiführen einer Korrelation zwischen der Aufzeichnung bzw. Wiedergabe und dem Aufzeichnungsträger mit einer Vorrichtung zur Aufzeichnung und Wiedergabe von Informationen durchgeführt, wobei das ROM-RAM-Speichermedium über eine RAM-Informationsspur verfügt, die einen mit der ROM-Informationsspur übereinstimmenden Verlauf aufweist. D.h., daß die RAM-Informationsspur der ROM-Informationsspur überlagert ist und im Gegensatz zu einer gewobbelten Informationsspur keine orthogonal zur Spurrichtung verlaufende Auslenkung bzw. Wobbelung aufweist. Dennoch werden eine Aufzeichnung und Wiedergabe von Informationen ermöglicht, da anstelle des Wobbelsignals in vorteilhafter Weise im ROM-Bereich des ROM-RAM-Speichermediums vorhandene Daten, die vorzugsweise während der Aufzeichnung ausgelesen werden, zur Hilfe genommen werden, um insbesondere die Rotationsgeschwindigkeit des Aufzeichnungsträgers zu steuern und den Aufzeichnungsort zu lokalisieren. Hierzu können die im Zusammenhang mit der Wiedergabe, Verschlüsselung und Synchronisation von ROM-Speichermedien bekannte Verfahren und Vorrichtungen verwendet werden. Auch zur Wiedergabe der im RAM-Bereich gespeicherten Informationen sind die im ROM-Bereich vorhandenen Daten vorteilhaft verwendbar.

Als ROM-RAM-Speichermedium ist in vorteilhafter Weise eine magneto-optische Platte geeignet, die sowohl Pit-Strukturen als auch magnetische Domänen aufweist, wie beispielsweise eine RO/AM-Disc, wobei die Anwendung jedoch nicht auf derartige Aufzeichnungsträger beschränkt ist, sondern auch bandförmige oder flächenhafte Aufzeichnungsträger verwendbar sind. Die Aufzeichnung und Wiedergabe von Informationen wird mit einer Aufzeichnungs- und Wiedergabeeinrichtung durchgeführt, mit der das vorzugsweise von einem magneto-optischen Aufzeichnungsträger mit spiralförmiger Informationsspur gebildete ROM-RAM-Speichermedium abgetastet und beschrieben wird.

Die Verwendung von im ROM-Bereich vorhandenen Daten zum Steuern des Aufzeichnungsmediums beim Aufzeichnen und/oder Wiedergeben von Informationen gestattet in vorteilhafter Weise das Aufzeichnen von Informationen im RAM-Bereich ohne Wobbelung, so daß die durch das Wobbeln bedingten Nachteile vermieden werden. Aufgrund unterschiedlicher Lesetechniken können dennoch gemeinsam in einer Informationsspur gespeicherte RAM- und ROM-Informationen mit nur einer Abtastvorrichtung wiedergegeben werden, wobei für die im RAM-Bereich aufzeichenbaren Informationen beziehungsweise Daten eine im Vergleich zur MOD vergrößerte Speicherkapazität zur Verfügung steht, da es nicht erforderlich ist, im RAM-Bereich Daten zur Ortsbestimmung und Synchronisation vorzusehen. Die nutzbare Speicherkapazität ist folglich über die Summe der Speicherkapazitäten der kombinierten Speicher hinausgehend erhöht. Darüber hinaus wird der für die Aufzeichnungs- und Wiedergabeeinrichtung erforderliche Aufwand verringert, da die zum Dekodieren des Wobbelsignals bei der MOD benötigten Mittel nicht erforderlich sind.

Es sei darauf hingewiesen, daß der ROM-Bereich sowohl Steuerals auch Anwenderdaten enthält und der RAM-Bereich Anwenderspeicherbereiche enthält, die in den ROM-Bereich geschriebene Anwenderdaten überlagern.

Die Erfindung wird nachfolgend anhand eines Ausführungsbeispiels in Zeichnungen näher erläutert.

Es zeigen:
- Fig. 1: Informationsspur eines ROM-RAM-Speichermediums,
- Fig. 2: Blockschaltbild einer Aufzeichnungs- und Wiedergabeeinrichtung,
- Fig. 3: Prinzipskizze einer Vorrichtung zur Aufzeichnung und Wiedergabe von Informationen.

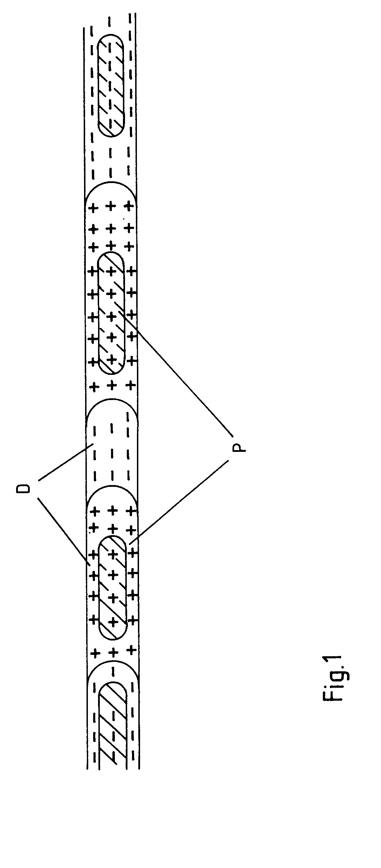

Zur Aufzeichnung und Wiedergabe von Informationen wird ein Aufzeichnungsträger M verwendet, der ein ROM-RAM-Speichermedium ist, das von einer magneto-optischen Platte gebildet wird, die Fig.1 entsprechend sowohl im Zusammenhang mit der CD bekannte Pits P als auch im Zusammenhang mit der MOD bekannte magnetische Domänen D als Informationsträger aufweist, wobei die magnetischen Domänen D jedoch in überraschender Weise in der Richtung mit der Informationsspur der Pits P übereinstimmend angeordnet sind. Um trotz der ungewobbelten RAM-Informationsspur, die von den magnetischen Domänen D gebildet wird, Informationen aufzeichnen zu können, werden im ROM-Bereich des ROM-RAM-Speichermediums beziehungsweise in der ROM-Informationsspur des Aufzeichnungsträgers vorhandene Daten zum Lokalisieren des Aufzeichnungsortes und/oder zum Herstellen der Korrelation zwischen der aufzuzeichnenden bzw. wiederzugebenden Information und der Rotationsgeschwindigkeit beziehungsweise Fortschreitgeschwindigkeit des Aufzeichnungsträgers oder eines Aufzeichnungskopfes zur Hilfe zugenommen. Die RAM-Informationsspur kann von Daten zur Positionsangabe und Synchronisation wahlweise mindestens teilweise oder völlig befreit werden, so daß vergleichsweise zusätzliche Speicherkapazität bereitgestellt wird. Eine nur teilweise Entlastung des RAM-Speicherbereiches ist ausschließlich für eine gewünschte Eigensynchronisation bei der Wiedergabe des RAM-Signals vorgesehen.

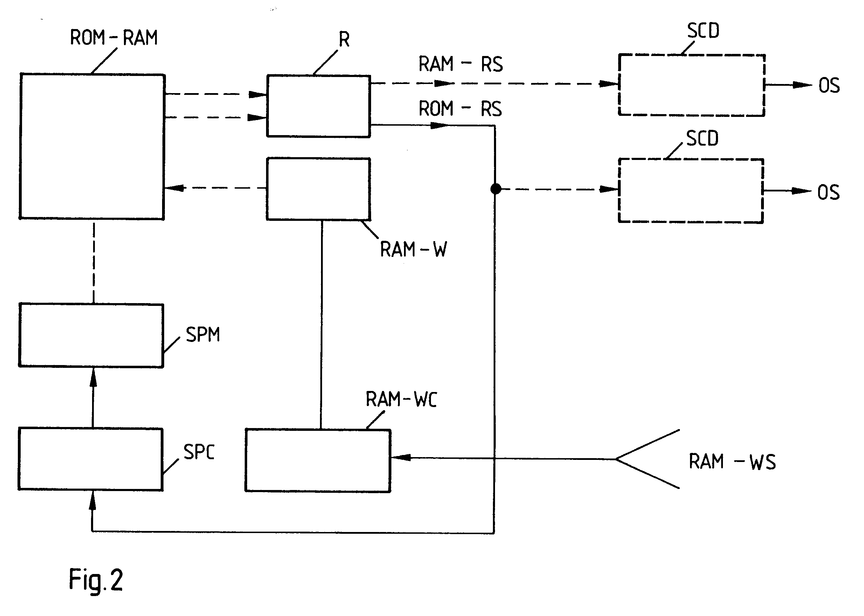

Darüber hinaus wird der Aufwand für eine Vorrichtung zur Aufzeichnung und Wiedergabe von Informationen, deren Blockschaltbild in Fig. 2 dargestellt ist, verringert. Das ROM-RAM-Speichermedium beziehungsweise der Aufzeichnungsträger M wird von einer Antriebseinrichtung SPM angetrieben, die von einer Geschwindigkeitsteuereinrichtung SPC gesteuert wird. Das Steuersignal für die Geschwindigkeitsteuereinrichtung SPC wird ausschließlich aus einem ROM-Signal ROM-RS abgeleitet, das mit einer Abtasteinheit R vom Aufzeichnungsträger M detektiert wird. Die Antasteinheit R stellt sowohl das ROM-Signal ROM-RS als auch das RAM-Signal RAM-RS bereit, die dann gegebenenfalls jeweils über eine Signalaufbereitungsstufe SCD anderen Systemen OS zugeführt werden.

Eine auf dem Aufzeichnungsträger M aufzuzeichnende Information beziehungsweise ein Schreibsignal RAM-WS wird über eine Schreibsteuereinheit RAM-WC und über eine Schreibeinheit RAM-W auf den Aufzeichnungsträger M übertragen bzw. auf dem Aufzeichnungsträger M gespeichert. Aus dem Blockschaltbild gemäß Fig. 2 ist ersichtlich, daß zur Aufzeichnung des Schreibsignals RAM-WS die im ROM-Bereich des als ROM-RAM-Speichermedium ausgebildeten Aufzeichnungsträgers M vorhandenen Daten zur Hilfe genommen werden, wodurch die für MOD-Aufzeichnungs- und Wiedergabegeräte notwendige aufwendige Geschwindigkeitsregelung entfällt, so daß der Aufwand wesentlich verringert wird. Dies wird insbesondere dadurch möglich, daß während des Aufzeichnens gleichzeitig Daten vom Aufzeichnungsträger gelesen werden können. Das ständig vorhandene ROM-Signal ROM-RS wird als Regelgröße für die Rotationsgeschwindigkeit des Aufzeichnungsträgers M verwendet und auch die aktuelle Position der Abtasteinheit R relativ zum Aufzeichnungsträger M kann in bekannter Art und Weise dem ROM-Signal ROM-RS entnommen werden.

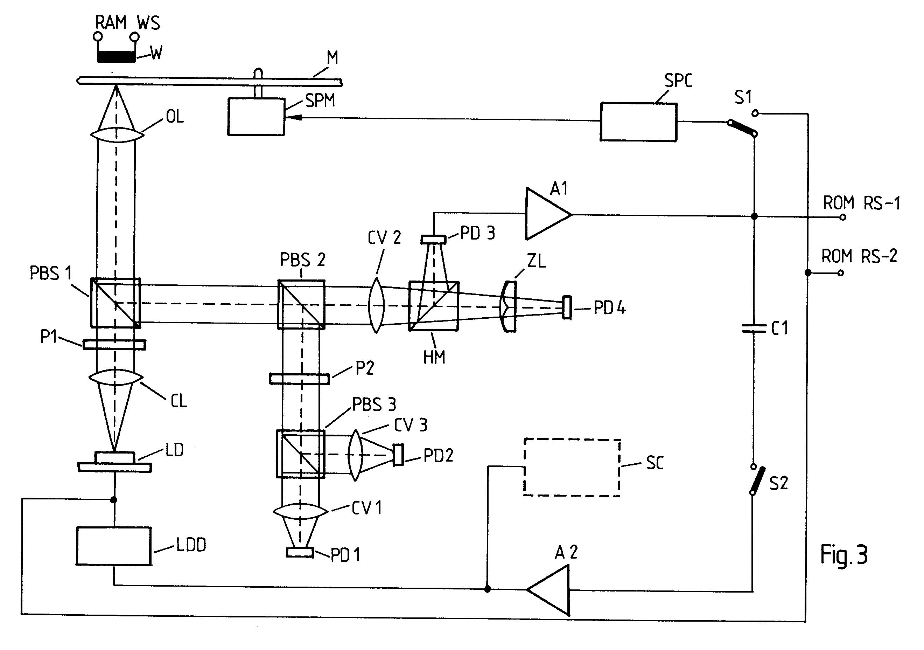

Das Aufzeichnen und die Wiedergabe von Informationen werden anhand einer in Fig. 3 dargestellten Prinzipskizze einer entsprechenden Vorrichtung erläutert. Zum Aufzeichnen von Informationen auf dem Aufzeichnungsträger M, der ein ROM-RAM-Speichermedium in Form einer magneto-optischen Platte ist, die sowohl Pits P als auch magnetische Domänen D in einer Informationsspur aufweist, wird die aufzuzeichnende Information bzw. das Schreibsignal RAM-WS einer ein Magnetfeld erzeugenden Spule W zugeführt, mit der die Magnetisierungsrichtung der in der magnetischen Schicht des Aufzeichnungsträgers M angeordneten Domänen D beeinflußt bzw. verändert wird. Die magnetische Schicht wird hierzu mit einem von einer Laserdiode LD erzeugten Laserstrahl über die Curie-Temperatur der magnetischen Schicht erhitzt, so daß die durch das Magnetfeld der Spule W festgelegte Magnetisierungsrichtung nach dem Abkühlen unter die Curie-Temperatur im Aufzeichnungsträger M erhalten bleibt und die Information auf dem Aufzeichnungsträger M abgespeichert ist. Zum Erhitzen der magnetischen Schicht wird die Laserdiode LD über einen Lasertreiber LDD von einer Systemsteuerung SC angesteuert, die hier ausschließlich nur in diesem Zusammenhang erwähnt sei, ohne auf ihre umfassenden Aufgaben näher einzugehen. Im mit einer Kollimatorlinse CL und einer Objektivlinse OL auf dem Aufzeichnungsträger M gebildeten Brennpunkt des Laserstrahls wird die erforderliche Temperatur zum Erhitzen der magnetischen Schicht erzeugt. Zur Steuerung der Rotationsgeschwindigkeit während der Aufzeichnung und zur Bestimmung des Aufzeichnungsortes dient ein auch während der Aufzeichnung vom Aufzeichnungsträger M gelesenes ROM-Signal, das mit dem von der Laserdiode LD erzeugten Laser- bzw. Lichtstrahl von den auf dem Aufzeichnungsträger M angeordneten Pits P mit einem im Strahlengang des Laserstrahls angeordneten ersten Polarisationsstrahlteiler PBS1, einer zweiten Konvexlinse CV2 sowie einem Strahlteiler HM durch eine Photodiode PD3 detektiert wird. Das mit der Photodiode PD3 detektierte ROM-Signal ROM-RS wird dann mit einem Strom-Spannungswandler A1 zu einem weiterverarbeitbaren Informationssignal beziehungsweise dem eigentlichen ROM-Signal ROM-RS-1 aufbereitet.

Dieses ROM-Signal ROM-RS-1, das auch Informationen über die aktuelle Position und die Rotationsgeschwindigkeit des Aufzeichnungsträgers enthält, wird dann über einen Schalter S1 einer Geschwindigkeitsteuereinrichtung SPC zugeführt, die die für die erforderliche Rotationsgeschwindigkeit des Aufzeichnungsträgers M notwendige Steuerspannung am Plattentellermotor SPM anlegt. Zum Aufzeichnen von Informationen auf dem ROM-RAM-Speichermedium beziehungsweise auf den Aufzeichnungsträger M wird folglich das vom Aufzeichnungsträger M detektierte ROM-Signal ROM-RS-1 zur Hilfe genommen. Der Schalter S2 ist in dieser Betriebsart vorzugsweise geöffnet und bei entsprechender Weiterverarbeitung des ROM-Signals ROM-RS-1 können sogar die in der ROM-Spur des Aufzeichnungsträgers M gespeicherten Informationen während des Aufzeichnens und obwohl sich die RAM-Informationsspur und die ROM-Informationsspur Fig. 1 entsprechend überlagern, wiedergegeben werden.

Eine zusätzliche Beeinflussung des RAM-Signals RAM-WS ist nicht erforderlich, so daß damit verbundene Nachteile nicht auftreten können und der üblicher Weise zur Aufzeichnung eines RAM-Signals RAM-WS erforderliche Aufwand zur Steuerung des Aufzeichnungsträgers M wird vermieden, da die zur Wiedergabe des ROM-Signals beziehungsweise in den Pits P gespeicherter Informationen vorgesehenen Mittel in vorteilhafter Weise genutzt werden können. Da das RAM-Signal RAM-WS von Zusatzinformationen zum Lokalisieren des Aufzeichnungsortes und zur Geschwindigkeitssteuerung befreit ist, steht darüber hinaus zusätzliche Speicherkapazität zur Verfügung.

Hinsichtlich der Wiedergabe von auf einem ROM-RAM-Speichermedium aufgezeichneter Informationen sind mehrere Betriebsarten möglich.

Sollen beispielsweise ausschließlich die in den Pits P beziehungsweise im ROM-Bereich gespeicherten Informationen wiedergegeben werden, kann dies in der vorstehend beschriebenen Art erfolgen, wobei der Laserstrahl bzw. die Laserdiode LD derart gesteuert wird, daß die magnetische Schicht nicht erhitzt wird, um ein Zerstören der gegebenenfalls im RAM-Bereich bereits gespeicherten Informationen zu verhindern.

Um ausschließlich im RAM-Bereich bzw. in magnetischen Domänen D gespeicherte Informationen wiederzugeben, wird in bekannter Weise polarisiertes Licht verwendet und sind insbesondere eine zwischen der Kollimatorlinse CL und dem ersten Polarisationsstrahlteiler PBS1 im Strahlengang des Laserstrahls angeordnete erste λ /2-Platte P1, ein zwischen dem ersten Polarisationsstrahlteiler PBS1 und der zweiten Konvexlinse CV2 angeordneter zweiter Polarisationsstrahlteiler PBS2, eine zweite λ /2-Platte P2, ein dritter Polarisationsstrahlteiler PBS3, eine erste Konvexlinse CV1, eine dritte Konvexlinse CV3 sowie eine erste und eine zweite Photodiode PD1, PD2 vorgesehen.

Das RAM-Signal, das vom Aufzeichnungsträger M gelesen wird, stellt sich dann als Differenzsignal der mit der ersten und zweiten Photodiode PD1, PD2 detektierten Signale dar. In dieser Betriebsart ist der Schalter S2 geschlossen und die Steuerung des Aufzeichnungsträgers M erfolgt mit dem ROM-Signal ROM-RS-2, das dann zwischen dem Lasertreiber LDD und der Laserdiode LD abgegriffen und über den ersten Schalter S1 der Geschwindigkeitssteuereinrichtung PSC zugeführt wird, sowie an einem entsprechenden Anschluß ROM-RS-2 zur parallelen Wiedergabe zum RAM-Signal bereitgestellt wird. Der Lasertreiber LDD, beziehungsweise die Laserdiode LD, wird in dieser Betriebsart über einen Regelverstärker A2, den Schalter S2 und einen Kondensator C1 sowie den Strom-Spannungswandler A1 mit einem von der Photodiode PD3 detektierten Regelsignal angesteuert. Der Kondensator C1 ist dabei insbesondere zum Abtrennen einer Gleichstromkomponente des Regelsignals vorgesehen.

Die in der Prinzipskizze gemäß Fig. 3 vorgesehene Zylinderlinse ZL und vierte Photodiode PD4 sind insbesondere zur Spurführung und Fokussierung des Abtaststrahls vorgesehen.

Wenngleich das Verfahren und die Vorrichtung zur Aufzeichnung und Wiedergabe von Informationen nur anhand eines ROM-RAM-Speichermediums in Form einer magneto-optischen Platte mit spiralförmiger Informationsspur, die sowohl Pits P als auch magnetische Domänen P aufweist, beschrieben wurde, so ist die Anwendung jedoch nicht auf einen derartigen Aufzeichnungsträger beschränkt.

## Patentansprüche

1. Verfahren zur Aufzeichnung und Wiedergabe von Informationen bei einem ROM-RAM-Speichermedium, **dadurch gekennzeichnet**, daß eine Aufzeichnung von Informationen im RAM-Bereich eines ROM-RAM-Speichermediums unter Zuhilfenahme von aus dem ROM-Bereich des ROM-RAM-Speichermediums gelesenen Daten durchgeführt wird und/oder eine Wiedergabe von im RAM-Bereich des ROM-RAM-Speichermediums abgespeicherter Informationen unter Zuhilfenahme von aus dem ROM-Bereich des ROM-RAM-Speichermediums gelesenen Daten durchgeführt wird.

2. Verfahren nach Anspruch 1, **dadurch gekennzeichnet**, daß die Aufzeichnung von Informationen im RAM-Bereich des ROM-RAM-Speichermediums gleichzeitig während eines Auslesens und unter Zuhilfenahme gleichzeitig ausgelesener Daten aus dem ROM-Bereich des ROM-RAM-Speichermediums durchgeführt wird.

3. Verfahren nach einem der Ansprüche 1 bis 2, **dadurch gekennzeichnet**, daß eine Aufzeichnung und Wiedergabe von Informationen bei einem ROM-RAM-Speichermedium mit einer mit der ROM-Informationsspur übereinstimmenden RAM-Informationsspur durchgeführt wird.

4. Verfahren nach einem der Ansprüche 1 bis 3, **dadurch gekennzeichnet**, daß mindestens zur Aufzeichnung von Informationen am Aufzeichnungsort im ROM-Bereich eines ROM-RAM-Speichermediums vorhandene Daten zur Hilfe genommen werden.

5. Verfahren nach einem der Ansprüche 1 bis 4, **dadurch gekennzeichnet**, daß das ROM-RAM-Speichermedium ein sowohl Pits (P) als auch magnetische Domänen (D) aufweisender magneto-optischer Aufzeichnungsträger (M) ist und mindestens zu einer Aufzeichnung von Informationen im von Pits (P) gebildeten ROM-Bereich des ROM-RAM-Speichermediums enthaltene Daten zur Hilfe genommen werden.

6. Verfahren nach einem der Ansprüche 1 bis 5**, dadurch gekennzeichnet**, daß das ROM-RAM-Speichermedium eine RO/AM-Disc ist und zum Steuern der Rotationsgeschwindigkeit der RO/AM-Disc mindestens während einer Aufzeichnung von Informationen gleichzeitig aus dem ROM-Bereich der RO/AM-Disc gelesene Daten verwendet werden.

7. Verfahren nach einem der Ansprüche 1 bis 6, **dadurch gekennzeichnet**, daß zur Aufzeichnung und/oder Wiedergabe von Informationen bei einem ROM-RAM-Speichermedium eine der RAM-Informationsspur überlagerte ROM-Informationsspur verwendet wird und die Zuhilfenahme der im ROM-Bereich enthaltenen Daten zu einer Ortsbestimmung und/oder zum Herstellen einer Korrelation zwischen der Aufzeichnung bzw. Wiedergabe und dem Aufzeichnungsträger (M) mit einer Aufzeichnungs- und Wiedergabeeinrichtung durchgeführt wird.

8. Vorrichtung zur Aufzeichnung und Wiedergabe von Informationen bei einem ROM-RAM-Speichermedium, **dadurch gekennzeichnet**, daß das ROM-RAM-Speichermedium eine RAM-Informationsspur aufweist, die einen mit der ROM-Informationsspur übereinstimmenden Verlauf aufweist und zur Aufzeichnung und Wiedergabe von Informationen mindestens eine Aufzeichnungs- und Wiedergabeeinrichtung vorgesehen ist.

9. Vorrichtung nach Anspruch 8, **dadurch gekennzeichnet**, daß das ROM-RAM-Speichermedium ein plattenförmiger magneto-optischer Aufzeichnungsträger mit einer spiralförmigen Informationsspur ist, die sowohl Pits (P) als auch magnetische Domänen (D) aufweist.

10. Vorrichtung nach Anspruch 8, **dadurch gekennzeichnet**, daß die Aufzeichnungs- und Wiedergabeeinrichtung zum Lokalisieren des Aufzeichnungsortes und/oder zum Steuern der Geschwindigkeit des Aufzeichnungsträgers (M) oder einer entsprechenden Aufzeichnungseinheit ausschließlich die zur Wiedergabe auf dem Aufzeichnungsträger (M) gespeicherter ROM-Signale (ROM-RS) vorgesehenen Mittel aufweist.
